# EUROPEAN PATENT SPECIFICATION

(11) **EP 0 776 962 B1**
(45) Date of publication and mention of the grant of the patent: **02.10.2002**
(21) Application number: 96119078.2
(22) Date of filing: 28.11.1996
(51) Int. Cl.: C10J 3/54, C10J 3/56, C10J 3/66

(54) **Method and apparatus for treating wastes by gasification**
Verfahren und Vorrichtung zur Behandlung von Abfällen mittels Vergasung
Procédé et appareil pour le traitement de déchets par gazéification

(30) Priority: 28.11.1995 JP 33118595; 04.09.1996 JP 25223496
(43) Date of publication of application: 04.06.1997
(73) Proprietor: EBARA CORPORATION, Ohta-ku, Tokyo (JP)
(72) Inventor: Fujimura, Hiroyuki, Tokyo (JP); Fujinami, Shosaku, Tokyo (JP); Hirose, Tetsuhisa, Tokyo (JP); Oshita, Takahiro, Yokohama-shi, Kanagawa-ken (JP); Irie, Masaaki, Tokyo (JP); Takano, Kazuo, Tokyo (JP)
(74) Representative: Wagner, Karl H., Dipl.-Ing.

(56) References cited:
- EP-A- 0 153 235
- EP-A- 0 648 829
- EP-A- 0 676 464
- EP-A- 0 676 465
- DE-C- 4 435 349
- VGBKRAFTSWERKTECHNIK, vol. 73, no. 10, 1993, pages 889-892, XP000398033 H.G.KITZEROW: "STELLENWERT DER WIRBELSCHICHTVERBRENNUNG BEI DER THERMISCHEN ABFALLVERWETUNG"

## Description

### BACKGROUND OF THE INVENTION

### Field of the Invention:

The present invention relates to a method and apparatus for treating wastes by gasification, and more particularly to a method and apparatus for treating wastes by gasification at a relatively low temperature and then at a relatively high temperature to recover useful resources including energy, valuables such as metals, and gases for use as materials for chemical industry or fuel.

### Description of the Prior Art:

It has heretofore been customary to treat a considerable amount of municipal wastes, waste tires, sewage sludges, and industrial sludges with dedicated incinerators. Night soil and highly concentrated wastes have also been treated with dedicated wastewater treatment facilities. However, large quantities of industrial wastes are still being discarded, thus causing environmental pollution.

As waste treatment technology suitable for environmental conservation to replace conventional incineration systems, gasification and combustion system which combine gasification and high-temperature combustion have been developed, and some of them are about to be put to practical use.

Among the developed gasification and combustion systems, there are a system having a vertical shaft furnace as a gasification furnace (hereinafter referred to as an "S system") and a system having a rotary kiln as a gasification furnace (hereinafter referred to as an "R system"). According to the S system, a drying/preheating zone at a temperature ranging from 200 to 300°C, a thermally decomposing zone at a temperature ranging from 300 to 1000°C, and a combusting/melting zone at a temperature of 1500°C or higher are formed as accumulated layers in the gasification furnace. Wastes and coke charged into the furnace from an upper portion thereof descend in the furnace while exchanging heat with gases which have been generated in the lower zones. The generated gases that flow upward in the furnace are discharged from the furnace, and then combusted in a subsequent combustion furnace at a temperature of about 900°C. Carbonous materials generated in the thermally decomposing zone and the charged coke descend and enter the combusting/melting zone, and are combusted at a high temperature by oxygen-enriched air supplied from a tuyere to melt ash content and inorganic materials in their entirety.

According to the R system, wastes are crushed and supplied into a drum-type rotary furnace which is externally heated by high-temperature air. In the drum-type rotary furnace, the wastes are slowly pyrolized at a temperature of about 450°C. Carbonous materials generated at this time are discharged from the drum-type rotary furnace, and cooled down to a temperature at which they will not be ignited. Then, the carbonous materials are pulverized and supplied to a subsequent swirling-type high-temperature combustor, and in the swirling-type high-temperature combustor, the pulverized carbonous materials and the gases supplied from the rotary furnace are combusted at a high temperature of about 1300°C to melt ash content into molten slag.

The S and R systems suffer various disadvantages of their own as described below. In the S system, the operating cost of the shaft furnace is high because supplementary materials such as coke and oxygen-enriched air are required for maintaining the melting zone at the bottom of the furnace, at a temperature ranging from 1700 to 1800°C. The use of the coke poses a problem that an increased amount of carbon dioxide is discharged from the furnace. Since almost all amount of metals contained in the wastes are melted, they cannot be recycled as ingot metal in accordance with a kind of metal. It is difficult for the furnace which belongs to a type of fixed-bed furnaces to operate stably because the wastes, in various different shapes, are stacked in layers in the furnace and the combusting/melting zone is present at a lowest region of the furnace. This is because although it is very important for a fixed-bed furnace to allow gases to flow uniformly in the layers, i.e., to keep gas permeability, the various different shapes of the wastes prevent the gases from flowing uniformly in the layers, but tend to cause the gases to blow through the layers or to drift. The addition of the coke as supplementary fuel serves to keep gas permeability, but this role is not enough, and hence change in the flow rate of the gases and the internal pressure of the furnace cannot be kept constant. Since not all the generated gases pass through a high-temperature region in excess of 1000°C, it is impossible to completely prevent the generation of dioxins and furans.

In the R system, since the gasification furnace comprises a rotary furnace which is externally heated by high-temperature air, it has poor thermal conductivity and is unavoidably large in size. Further, tar produced by the thermal decomposition and undecomposed substances cover the heat transfer surface of the furnace, making its thermal conductivity poorer. It is difficult to obtain the high-temperature air which is heated up to 600°C through a heat exchange with the exhaust gases in terms of the material of the heat exchanger. The generated carbonous materials are discharged from the rotary furnace, then pulverized, and supplied to a combustion furnace in which they are mixed with gases supplied directly from the rotary furnace and combusted at a high temperature. Therefore, the R system needs handling facilities for discharging, cooling, pulverizing, storing, and supplying the carbonous materials. Heat loss caused by cooling of the carbonous materials or radiation from the carbonous materials during handling thereof is not desirable from the standpoint of effective energy utilization. If the carbonous materials are discharged out without being cooled, then they will be ignited by contacting with air.

As described above, there have been proposed various new waste incineration processes for gasifying wastes and thereafter combusting generated substances at a high temperature to decompose dioxins and melt ash content into molten slag. However, no practically feasible technology has been available yet for recovering combustible gases by gasification from chemical recycling viewpoint.

On the other hand, CO (carbon monoxide) and H₂ (hydrogen) are widely used as gases for materials of chemical synthesis. Carbon monoxide is used for chemical synthesis of gasoline, alcohol, organic acid, and ester. Hydrogen is used for chemical synthesis of ammonia (NH₃) or methanol, hydrogenation desulfurization, hydrogenolysis, fat hydrogenation, and welding. Carbon monoxide has been produced by gasification of coal or coke, and hydrogen has been produced by either steam reforming of natural gas or naphtha, or gasification of petroleum, coal or petroleum coke. Since most of those materials for producing CO or H₂ are dependent on importation from abroad, there have longed for procuring materials of CO or H₂ which are inexpensive and available in our own country.

Both, EP-A-0 676 465 and EP-A-0 676 464 disclose a two-stage combustion process and apparatus for combusting wastes.

VGB KRAFTWERKSTECHNIK, vol. 73, no. 10, 1993, pages 889-892, XP000398033 H.G.KITZEROW: "Stellenwert der Wirbelschichtverbrennung bei der thermischen Abfallverwertung" describes a fluidized-bed incinerator for combusting municipal wastes.

In accordance with the present invention, a method for treating wastes by gasification as set forth in claim 1 and an apparatus for treating wastes by gasification as set forth in claim 19 are provided. Preferred embodiments of the invention are disclosed in the dependent claims.

### SUMMARY OF THE INVENTION

It is therefore an object of the present invention to provide a method and apparatus for treating wastes by gasification which can be operated easily and safely, has high thermal efficiency, and can produce low calorific gas or medium calorific gas that can be used as generation of electric power, industrial fuel gases, and materials for chemical industry.

In order to achieve the above object, according to one aspect of the present invention, there is provided a method for treating wastes by gasification, comprising the steps of: gasifying wastes in a fluidized-bed reactor at a relatively low temperature; introducing gaseous material and char produced in the fluidized-bed reactor into a high-temperature combustor; and producing low calorific gas or medium calorific gas in the high-temperature combustor at a relatively high temperature.

According to another aspect of the present invention, there is provided an apparatus for treating wastes by gasification, comprising: a fluidized-bed reactor for gasifying wastes at a relatively low temperature to produce gaseous material and char; and a high-temperature combustor for producing low calorific gas or medium calorific gas from the gaseous material and the char at a relatively high temperature.

The fluidized-bed reactor may comprise a revolving flow-type fluidized-bed reactor. The high-temperature combustor may comprise a swirling-type high-temperature combustor.

The relatively low temperature in the fluidized-bed reactor may be in the range of 450 to 800°C. The relatively low temperature in a fluidized-bed of the fluidized-bed reactor may be in the range of 450 to 650°C. The relatively high temperature in the high-temperature combustor may be 1300°C or higher.

The gas supplied to the fluidized-bed reactor for gasification may comprise one of air, oxygen enriched air, a mixture of air and steam, a mixture of oxygen enriched air and steam, and a mixture of oxygen and steam. The gas supplied to the high-temperature combustor for gasification may comprise one of oxygen enriched air and oxygen.

The total amount of oxygen supplied to the fluidized-bed reactor and the high-temperature combustor may be in the range of 0.1 to 0.6 of the theoretical amount of oxygen for combustion. The amount of oxygen supplied to the fluidized-bed reactor may be in the range of 0.1 to 0.3 of the theoretical amount of oxygen for combustion.

The ash content in the wastes may be recovered as slag, while dioxins and precursor thereof may be substantially decomposed in the high-temperature combustor.

The low calorific gas or the medium calorific gas may have atmospheric pressure or high pressure, and may be used for power generation or fuel gas or synthesis gas for chemicals.

The fluidized-bed reactor may comprise a high pressure type fluidized-bed reactor. The high-temperature combustor may comprise a high pressure type high-temperature combustor.

The fluidized-bed in the fluidized-bed reactor may be in a reducing atmosphere, and metal in the wastes may be discharged in non-corroded condition from the fluidized-bed reactor.

The mixing ratio of low calorific wastes to high calorific wastes may be controlled on the basis of temperature in the fluidized-bed. The low calorific gas or the medium calorific gas may contain carbon monoxide and hydrogen.

Further, according to still another aspect of the present invention, there is provided a method for treating wastes by gasification, comprising the steps of: gasifying wastes in a fluidized-bed reactor at a relatively low temperature; introducing gaseous material and char produced in the fluidized-bed reactor into a high-temperature combustor; and producing calorific gas in the high-temperature combustor at a relatively high temperature.

The calorific gas is defined as gas mainly composed of CO and H₂ as combustible gas component.

The above and other objects, features, and advantages of the present invention will become apparent from the following description when taken in conjunction with the accompanying drawings which illustrate preferred embodiments of the present invention by way of example.

### BRIEF DESCRIPTION OF THE DRAWINGS

FIG. 1 is a block diagram showing a concept of a method for treating wastes by gasification according to the present invention;
FIG. 2 is a schematic diagram of an apparatus for carrying out the treating method according to a first embodiment of the present invention;
FIG. 3 is a schematic diagram of an apparatus for carrying out the treating method according to a second embodiment of the present invention;
FIG. 4 is a schematic diagram of an apparatus for carrying out the treating method according to a third embodiment of the present invention;
FIG. 5 is a schematic diagram of an apparatus for carrying out the treating method according to a fourth embodiment of the present invention;
FIG. 6 is a schematic diagram of an apparatus for carrying out the treating method according to a fifth embodiment of the present invention; and
FIG. 7 is a schematic diagram of an apparatus for carrying out the treating method according to a sixth embodiment of the present invention.

### DETAILED DESCRIPTION OF THE PREFERRED EMBODIMENTS

A method and apparatus for treating wastes by gasification according to the present invention will be described below with reference to drawings.

Wastes which are used in the present invention may be municipal wastes, refuse-derived fuel (RDF), solid-water mixture (SWM), biomass wastes, plastic wastes including fiber-reinforced plastics (FRP), automobile wastes (shredder dust, waste tires, etc.), electric appliance wastes, special wastes (medical wastes, etc.), sewage sludges, night soil, highly concentrated waste liquids, industrial sludges, which have widely different calorific values, moisture contents, shapes. These wastes may be used in combination. Low-quality coal may be used with these wastes.

The refuse-derived fuel (RDF) is produced by crushing and classifying municipal wastes, adding quicklime to the classified municipal wastes, and compacting them to shape. The solid water mixture is produced by crushing municipal wastes, converting them into a slurry with water, and converting the slurry under a high pressure into an oily fuel by hydrothermal reaction. The low-quality coal may be brown coal, lignite, peat, which have low degrees of coalification, or coal refuse which is produced upon coal separation.

These wastes are first supplied into a fluidized-bed reactor, and pyrolized therein. Particularly, by employing a revolving-type fluidized-bed reactor as the reactor, the wastes which have been crushed to not minute but small lumps by pretreatment can be supplied to the fluidized-bed reactor. The reason is that by an intense revolving flow of the fluidizing medium, good heat transfer to the supplied wastes can be obtained, and large-sized incombustibles can be discharged from the fluidized-bed furnace. The effects of the revolving flow of the fluidized medium will be described later in detail.

Therefore, among these wastes, the municipal wastes, the biomass wastes, the plastic wastes, and the automobile wastes are roughly crushed to a size of about 30 cm. The sewage sludges and night soil which have a high moisture content are dehydrated into a cake by a centrifugal separator or the like in dedicated treatment facilities, and then the cake is transported to a plant site which has a treating system of the present invention. The refuse-derived fuel, the solid water mixture, and the highly concentrated waste liquids are used as they are. Coal added for calorie adjustment may be used as it is, if it is crushed to a size of 40 mm or less.

The above wastes may be roughly grouped into high calorific wastes and low calorific wastes according to the calorie of their own and their moisture content. Generally, the municipal wastes, the refuse-derived fuel, the solid water mixture, the plastic wastes, the automobile wastes, and the electric appliance wastes belong to the high calorific wastes. The biomass wastes, the special wastes such as medical wastes, the dehydrated cake of sewage sludges and night soil, and the highly concentrated waste liquids belong to the low calorific wastes.

These wastes are charged into a high calorific waste pit, a low calorific waste pit, and a tank, and sufficiently stirred and mixed in the pits and the tank. Thereafter, they are supplied to the fluidized-bed reactor. Metals contained in the wastes which are supplied to the fluidized-bed reactor are recovered in a non-corroded condition if their melting points are higher than the temperature in a fluidized-bed in the fluidized-bed reactor. Therefore, these recovered metals can be used as ingot metal in accordance with a kind of metal.

If the wastes supplied to the fluidized-bed reactor have a constant quality, the ratio of the wastes to the gas supplied to the fluidized-bed reactor for gasification is also constant. However, if the proportion of the low calorific wastes in the supplied wastes increases or the overall moisture content in the supplied wastes increases, the temperature of the fluidized-bed tends to go down from a set value. When the temperature of the fluidized-bed goes down, it is desirable to adjust the proportion of the low calorific wastes to the high calorific wastes in the supplied wastes to keep the calorific value of the supplied wastes constant from the viewpoint of gas utilization facility at a later stage. Alternatively, coal with a high calorific value may be added to adjust the calorie of the supplied wastes.

Next, a fluidized-bed reactor for gasifying wastes at a relatively low temperature according to the present invention will be described below. Using such a fluidized-bed reactor for gasifying wastes at a relatively low temperature is one of the features of the present invention.

Fluidized-bed reactors themselves are known as combustion furnaces or gasification furnaces. However, it is a novel feature of the present invention to use a combination of a fluidized-bed reactor and a high-temperature combustor for producing combustible gases, differently to the prior art.

There is a known technology in which coal is supplied into a high-temperature gasification furnace as pulverized coal or coal water slurry. However, in case of wastes, it is not easy to pulverize them, compared with coal. Particularly, if the wastes contain incombustibles such as metals, debris, or stones, then it is almost impossible to pulverize the wastes under 100µ like as coal. However, in case of using the fluidized-bed reactor, the wastes can be pyrolized with coarse crushing to thus generate combustible gaseous materials and fine char. The generated gaseous materials and char are introduced into a subsequent high-temperature combustor in which they are gasified at a relatively high temperature. For the fluidized-bed reactor, only necessary work is to convert the wastes into combustible gaseous materials and char by a pyrolysis reaction, thus the fluidized-bed in the fluidized-bed reactor can be kept at a relatively low temperature. The fluidized-bed reactor which can be used in the present invention may be a known atmospheric or pressurized fluidized-bed reactor including a bubbling-type fluidized-bed furnace, in consideration of characteristics of wastes to be treated. However, it is particularly preferable to use a revolving flow-type fluidized-bed reactor which has been developed by the inventors of the present invention.

The revolving flow-type fluidized-bed reactor preferably has a circular horizontal cross-section, and has a relatively mild fluidized-bed with a substantially low fluidizing gas rate in a central region and a relatively intensive fluidized-bed with a substantially high fluidizing gas rate in a peripheral region. The revolving flow-type fluidized-bed reactor has an inclined wall installed along an inner wall in the vicinity of the surface of the fluidized-bed, for deflecting the flow of the fluidized medium from the peripheral region toward the central region so that a revolving flow of the fluidized medium is formed in such a manner that the fluidized medium descends in the mild fluidized-bed, ascends in the intense fluidized-bed, moves from the central region toward the peripheral region in a lower portion of the fluidized-bed and moves from the peripheral region toward the central region in an upper portion of the fluidized-bed.

The revolving flow-type fluidized-bed reactor having a specific structure according to the present invention offers the following advantages:
1. Since the produced char is not accumulated on the fluidized-bed and is dispersed well and uniformly in the fluidized-bed, oxidization of char can be effectively carried out in the fluidized-bed, particularly in the intense fluidized-bed. Heat generated by oxidization of char is transferred to the fluidized medium, and the transferred heat can be effectively used as a heat source for thermal decomposition and gasification at a central portion of the fluidized-bed in the fluidized-bed reactor.
2. Since the fluidized medium whose upward flow is deflected by the inclined wall collides with each other at the central portion of the fluidized-bed in the fluidized-bed reactor, char is pulverized. If hard silica sand is used as a fluidized medium, pulverization of char is further accelerated.
3. Since the wastes go down into the fluidized-bed by descending flow of the fluidized medium, the solid wastes which have been coarsely crashed only can be supplied to the fluidized-bed reactor. Therefore, it is possible to dispense with a pulverizing equipment, and electric power for pulverizing can be remarkably reduced.
4. Although large-sized incombustibles are generated due to coarse crushing of the wastes, such large-sized incombustibles can be easily discharged by the revolving flow of the fluidized medium from the fluidized-bed reactor.
5. Since the generated heat is dispersed by the revolving flow of the fluidized medium which is formed in overall regions of the fluidized-bed, trouble caused by generation of agglomeration or clinker can be avoided.

In case of a bubbling-type fluidized-bed which is generally used, although the fluidized medium can be uniformly fluidized in the fluidized-bed, dispersion of the fluidized medium in horizontal directions is not carried out well. Therefore, the revolving flow-type fluidized-bed reactor of the present invention is superior to the bubbling-type fluidized-bed reactor which is commonly used, in respect to the above advantages 1 through 5.

The fluidized-bed reactor of the present invention has the fluidized-bed whose temperature is in the range of 450 to 800°C. If the fluidized-bed temperature is lower than 450°C, since the reaction of thermally decomposing and gasifying the wastes would be extremely slow, undecomposed substances would be accumulated in the fluidized-bed, and an amount of produced char whose oxidization rate is slow would be increased. If the fluidized-bed temperature increases, the pyrolysis reaction of the wastes is speeded up, thereby solving the problem of the accumulation of undecomposed substances in the fluidized-bed. However, fluctuations in the feeding rate of wastes result in fluctuations in the amount of generated gas which would impair the operation of a subsequent swirling-type high-temperature combustor. This is because it is impossible to finely adjust the amount of oxygen containing gas supplied to the swirling-type high-temperature combustor in accordance with the amount of gas generated in the fluidized-bed reactor. Therefore, an upper limit for the temperature in the fluidized-bed is set to 650°C so that the pyrolysis reaction is relatively sluggish. The fluidized-bed reactor has a larger diameter portion above the fluidized-bed which is called "freeboard". By supplying oxygen containing gas such as substantially pure oxygen or oxygen enriched air to the freeboard, the load in the subsequent high-temperature combustor can be reduced, and gasification of tar and char in the generated gas can be accelerated in the freeboard.

According to the present invention, a primary combustion of the wastes is carried out in the fluidized-bed at a temperature ranging from 450 to 650°C, and then a secondary combustion of the wastes is carried out in the freeboard at a temperature ranging from 600 to 800°C, preferably ranging from 650 to 750°C.

The fluidizing gas supplied to the fluidized-bed reactor for gasifying the wastes is selected from air, oxygen enriched air, a mixture of air and steam, a mixture of oxygen enriched air and steam, and a mixture of oxygen and steam. As a fluidized medium, sand such as silica sand or Olivine sand, alumina, iron powder, limestone, dolomite, or the like may be used.

The gases generated in the fluidized-bed reactor contain a large amount of tar and carbonous materials. The carbonous materials are crushed into powdery char in the fluidized-bed, and the powdery char and gases are introduced into the swirling-type high-temperature combustor. Since the fluidized-bed is in a reducing atmosphere, metals in the wastes can be discharged in a non-corroded condition from the fluidized-bed reactor.

The metals which can be recovered are limited to those whose melting points are lower than the gasification temperature. Therefore, in order to recover aluminum having a melting point of 660°C, it is necessary to set the temperature in the fluidized-bed to 650°C or less.

Inasmuch as the fluidized-bed reactor is used to gasify wastes at a relatively low temperature, it is possible to treat various wastes having a size in the range of several millimeters to several centimeters. The treatment capability of the fluidized-bed reactor is high, and can be scaled up easily. The fluidized-bed reactor is free of moving parts so that it can easily be operated for adjustment of the temperature and other parameters, and has good thermal conductivity for a heating medium to keep the temperature of the fluidized-bed uniform.

If the fluidized-bed reactor comprises a revolving flow-type fluidized-bed reactor, the wastes do not need to be pulverized before being charged into the fluidized-bed reactor. The carbonous materials are effectively crushed in the fluidized-bed into char which is well dispersed in the fluidized-bed, and thus the fluidized-bed reactor has a high capacity of the wastes, can keep temperature in the fluidized-bed uniform, and has a high gasification efficiency.

Next, a high-temperature combustor will be described below. The high-temperature combustor is supplied with gaseous material and char introduced from the fluidized-bed reactor, and gasifies the gaseous material and char at a temperature of 1300°C or higher by bringing them into contact with gas supplied to the high-temperature combustor. Tar and char are fully gasified, and ash content therein is discharged as molten slag from the bottom of the high-temperature combustor.

The high-temperature combustor may comprise a Texaco furnace in which gaseous material and char are blown therein only from an upper part of the furnace, but may preferably comprise a swirling-type high-temperature combustor. In the swirling-type high-temperature combustor, gaseous material and char are gasified at a relatively high temperature while forming a swirling flow with gas for gasification, and ash content is melted, and then molten slag is separated and discharged therefrom.

By using the swirling-type high-temperature combustor, high load and high speed combustion can be performed, distribution of the residence time of gas becomes narrow, a carbon conversion percentage and a slag mist collecting efficiency is high, and the combustor can be compact.

The gas introduced into the high-temperature combustor for gasification may be selected from oxygen enriched air and oxygen. The total amount of oxygen supplied to the fluidized-bed reactor and the high-temperature combustor for gasification may be in the range of 0.1 to 0.6 of the theoretical amount of oxygen for combustion of the wastes. The amount of oxygen supplied to the fluidized-bed reactor may be in the range of 0.1 to 0.3 of the theoretical amount of oxygen for combustion of the wastes. In this manner, fuel gas having a low calorie ranging from 1000 to 1500 kcal/Nm³ (dry) or fuel gas having a medium calorie ranging from 2500 to 4500 kcal/Nm³ (dry) can be obtained from the high-temperature combustor. According to the present invention, gas containing CO and H₂ as main component can be produced from the wastes, and the produced gas can be used as industrial fuel gas or synthesis gas for chemical industry.

Since ash content in char which is introduced into the subsequent high-temperature combustor from the fluidized-bed reactor is converted into molten slag in the high-temperature combustor, harmful metals are sealed in the slag and will not be eluted out. Dioxins and precursor thereof, and PCB (polyclorinated biphenyl) are fully decomposed by the high-temperature combustion in the high-temperature combustor.

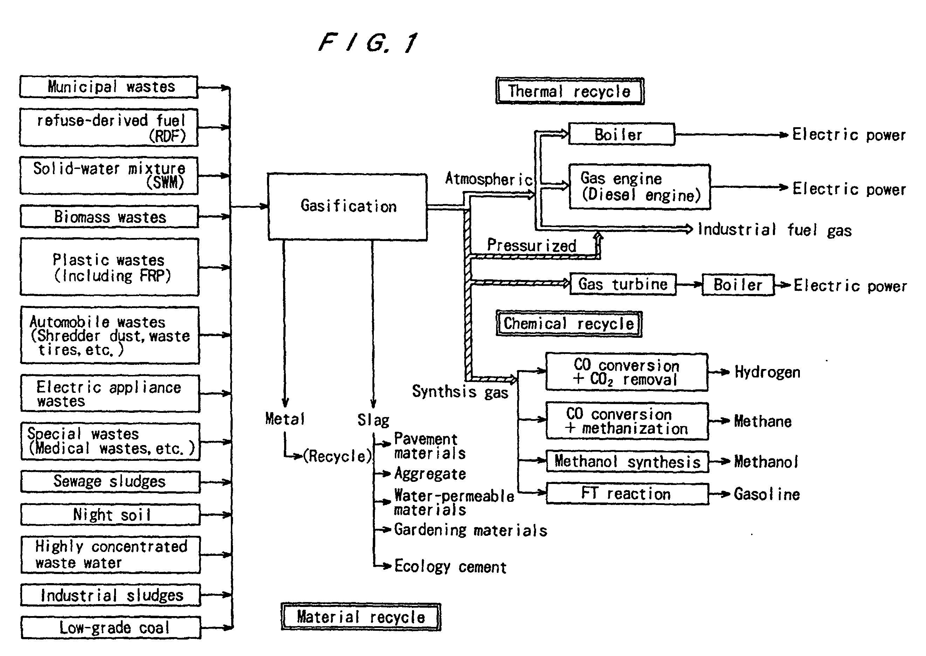

Processes of utilizing produced gases for a purpose depending on the nature of the gas will be described below with reference to FIG. 1. The processes are divided into a thermal recycle for utilizing energy of the gas and a chemical recycle for utilizing the gas as synthesis gas for chemical industry. If the produced gas is high-temperature exhaust gas having atmospheric pressure, then steam generated in a steam boiler is supplied to a steam turbine which drives an electric generator to recover the electric power. If the produced gas is fuel gas having atmospheric pressure, then it is consumed by a gas engine or a diesel engine which drives an electric generator to recover the electric power, or it is used as industrial fuel gas. The industrial fuel gas may be used in an ironmaking or steelmaking process.

If the produced gas is fuel gas having high pressure ranging from 20 to 40 atm, then it is used in a combined cycle power generation system including a gas turbine, or as an industrial fuel gas. If the produced gas is medium calorific fuel gas containing no N₂ and having high pressure, then it is used as synthesis gas for producing hydrogen, methane (SNG), alcohols such as methanol, and gasoline.

Hydrogen is produced by converting CO and H₂O in the synthesis gas into CO₂ and H₂, and removing CO₂. Methane is produced by CO shift conversion to adjust the ratio of carbon monoxide to hydrogen and methanization. Methanol is produced by CO shift conversion and methanol synthesis reaction. Mixtures of higher alcohols higher than methanol and ethanol are produced by alcohol synthesis reaction. Gasoline is synthesized by a Fischer-Tropsch reaction as carried out in Sasol of Republic of South Africa.

It is desirable to select an optimum process in consideration of the quality and quantity of wastes to be treated, conditions of a site where a treatment system is built, and a product to be produced.

Next, utilization of the slag will briefly be described below. Since slag generated from wastes and recovered from the high-temperature combustor contains a certain amount of chlorine, it is desirable to use the recovered slag as materials for so-called "ecology cement". The ecology cement is produced from burned ash, sewage sludges, and additives that are mixed at respective proportions of 4 : 3 : 3, and can be used as concrete products free of reinforcing bars, and curing agents. The recovered slag is available as granulated slag or annealed slag, and may be used as construction materials including road base materials, aggregate, water-permeable materials, or gardening materials.

Various apparatuses for carrying out the treating method for treating wastes by gasification according to the present invention will be described below.

Like or corresponding parts are denoted by like or corresponding reference numerals throughout views.

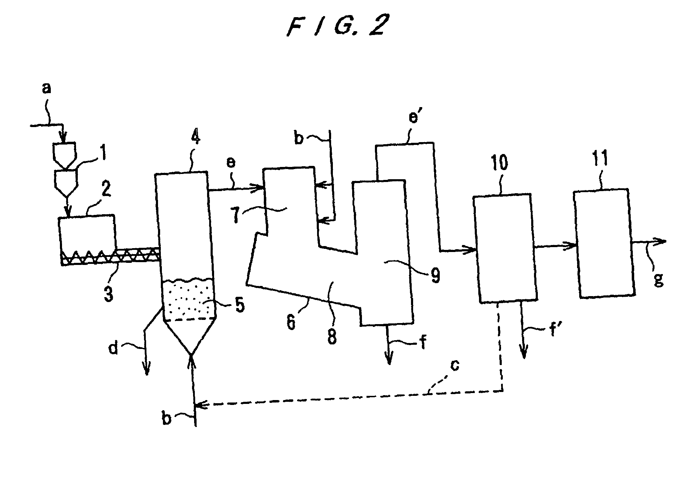

FIG. 2 schematically shows an apparatus for carrying out the method for treating wastes by gasification according to a first embodiment of the present invention.

The apparatus shown in FIG. 2 serves to produce synthesis gas having high pressure ranging from 20 to 40 atm. The apparatus includes a lock hopper system 1, a hopper 2, a screw feeder 3, and a fluidized-bed reactor 4 having a fluidized-bed 5 therein. The apparatus further includes a swirling-type high-temperature combustor 6 having a primary combustion chamber 7, a secondary combustion chamber 8 and a slag separation chamber 9, a waste heat boiler 10, and a scrubber 11. In FIG. 2, the symbols, a, b, c, and d represent wastes, oxygen, steam, and incombustibles, respectively. Further, the symbols, e, e', f, f' and g represent, gas generated in a fluidized-bed reactor 4, gas generated in a swirling-type high-temperature combustor 6, slag, ash, and produced gas, respectively.

Wastes "a" which have been uniformly mixed are charged through the lock hopper system 1 into the hopper 2, from which the wastes "a" are supplied at a constant rate through the screw feeder 3 into the fluidized-bed reactor 4. A mixture of oxygen "b" and steam "c" is supplied as fluidizing gas into a bottom portion of the fluidized-bed reactor 4. The wastes "a" dropped to the fluidized-bed 5 in the fluidized-bed reactor 4 is contacted with the gas supplied into the fluidized-bed reactor 4 for gasification in the fluidized-bed which is kept at a temperature ranging from 450 to 650°C. The wastes "a" are rapidly pyrolized in the fluidized-bed 5. When the wastes "a" are pyrolized, gas, tar, carbonous materials, and H₂O are generated. The carbonous materials are crushed into char by a vigorous action of the fluidized-bed 5.

The gas, tar, H₂O and char are then supplied altogether into the primary combustion chamber 7 of the swirling-type high-temperature combustor 6, in which they are mixed with oxygen "b" for gasification supplied to the high-temperature combustor in a swirling flow thereof and rapidly oxidized at a temperature of 1300°C or higher. Thus, ash content in the char is converted into slag mist which is trapped by slag phase on an inner wall of the combustor under the centrifugal forces of the swirling flow. The trapped slag mist then flows down on the inner wall and enters the secondary combustion chamber 8, from which slag "f" is discharged through a bottom of the slag separation chamber 9 to the outside of the combustor 6. The gasification at the relatively high temperature is completed in the secondary combustion chamber 8, producing medium calorific gas which comprises H₂, CO, CO₂ and H₂O and has a calorie ranging from 2500 to 4500 kcal/Nm³.

Since the fluidized-bed 5 in the fluidized-bed reactor 4 is in a reducing atmosphere, those metals, contained in the wastes "a", whose melting points are higher than the temperature of the fluidized-bed remain in a non-corroded condition, and are discharged as incombustibles "d" together with trash fragments, stones, glass, etc. from the bottom of the fluidized-bed reactor 4. The discharged metals can be reused as ingot metal in accordance with a kind of metal.

The gas discharged from the swirling-type high-temperature combustor 6 is supplied to the waste heat boiler 10 that generates steam "c" from the gas. In the scrubber 11, the gas supplied from the waste heat boiler 10 is cooled and scrubbed with an aqueous solution of NaOH to remove dust and HCl which would be harmful to a CO conversion catalyst, thus generating refined gas "g". The refined gas "g" may be used as industrial fuel gas. In this case, there is no need for CO conversion, and hence the scrubber 11 may be of a relatively simple structure. The generated gas "g" which comprises H₂, CO, CO₂ and H₂ can be used as synthesis gas for chemical industry.

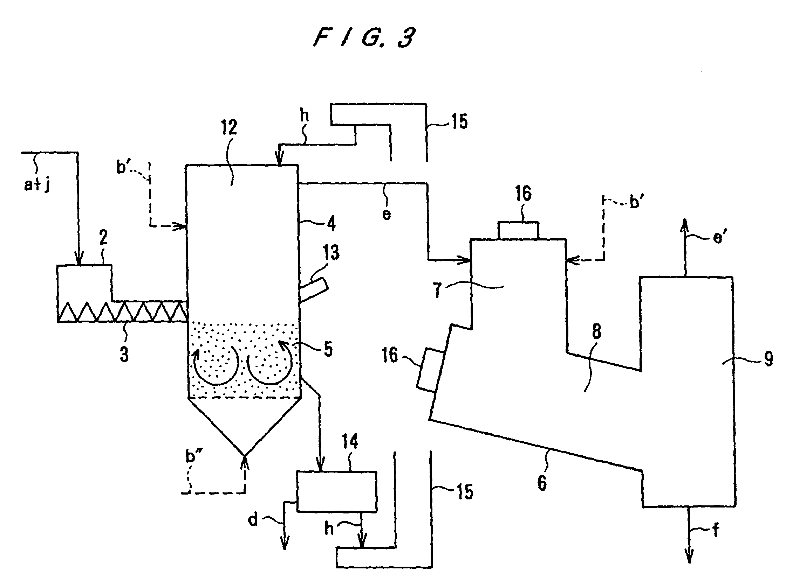

FIG. 3 shows an apparatus for carrying out the method for treating wastes by gasification according to a second embodiment of the present invention. The apparatus comprises a revolving flow-type fluidized-bed reactor under atmospheric pressure to produce low calorific gas.

As shown in FIG. 3, the fluidized-bed reactor 4 has a freeboard 12 and a burner 13, and is connected to a trommel 14 which is associated with a bucket conveyor 15. The swirling-type high-temperature combustor 6 has burners 16. Other details of the apparatus shown in FIG. 3 are essentially the same as those of the apparatus shown in FIG. 2.

Wastes "a" and coal "j" are supplied to the hopper 2, and then supplied at a constant rate by the screw feeder 3 to the fluidized-bed reactor 4. Preheated air "b"" is introduced as a fluidizing gas into the fluidized-bed reactor 4 from a bottom thereof, forming a fluidized-bed 5 of silica sand over a dispersion plate in the fluidized-bed reactor 4.

The fluidizing gas having a relatively low fluidizing gas velocity is supplied into the central part of the fluidized-bed 5, and the fluidizing gas having a relatively high fluidizing gas velocity is supplied into the peripheral part of the fluidized-bed 5, thus forming revolving flows of the fluidized medium in the fluidized-bed reactor 4 as shown in FIG. 3.

The wastes "a" and the coal "j" are charged to the fluidized-bed 5 and are contacted with O₂ in air within the fluidized-bed 5 which is kept at a temperature ranging from 450 to 650°C. Upon contact with O₂, the wastes "a" and the coal "j" are quickly pyrolized. The silica sand of the fluidized medium and incombustibles are discharged from the bottom of the fluidized-bed reactor 4 and enter the trommel 14. Large-sized incombustibles "d" and the silica sand are separated by the trommel 14, and the large-sized incombustibles "d" are discharged to the outside of the apparatus, and the silica sand "h" is supplied to the bucket conveyor 15. The bucket conveyor 15 carries the silica sand " h" upwardly and charges it back into the fluidized-bed reactor 4 from an upper end thereof. The discharged noncombustible material "d" contain metals. Since the fluidized-bed 5 is kept at a temperature ranging from 500 to 600°C, iron, copper, and aluminum can be recovered in a non-corroded condition suitable for recycling.

When the wastes "a" are gasified at a relatively low temperature in the fluidized-bed 5, gas, tar, carbonous materials and H₂O are generated. The gas, tar and H₂O are vaporized and ascend in the fluidized-bed reactor 4. The carbonous materials are pulverized into char by a stirring action of the fluidized-bed 5. Since the char is porous and light, it is carried with the upward flow of the generated gas. Since the fluidized medium of the fluidized-bed 5 is hard silica sand "h", the pulverization of the carbonous materials is accelerated. Air "b'" is blown into the freeboard 12 to gasify the gas, tar, and char again at a temperature ranging from 600 to 800°C for thereby accelerating conversion of gas components into low-molecular components and gasification of tar and char. The generated gas "e" discharged from the fluidized-bed reactor 4 is supplied into the primary combustion chamber 7 of the swirling-type high-temperature combustor 6, and combusted at a high temperature of 1300°C or higher while being mixed with preheated oxygen enriched air "b'" in a swirling flow thereof. The combustion is completed in the secondary combustion chamber 8, and the generated exhaust gas "e' " is discharged from the slag separation chamber 9. Because of the high temperature in the swirling-type high-temperature combustor 6, ash content in the char is converted into slag mist which is trapped by molten slag phase on an inner wall of the primary combustion chamber 7 under the centrifugal forces of the swirling flow. The molten slag flows down on the inner wall and enters the secondary combustion chamber 8, from which slag "f" is discharged through a bottom of the slag separation chamber 9. The primary and secondary combustion chambers 7 and 8 are provided with the respective burners 16 for start-up. In this manner, combustible gas having a low calorie ranging from 1000 to 1500 kcal/Nm³ is produced.

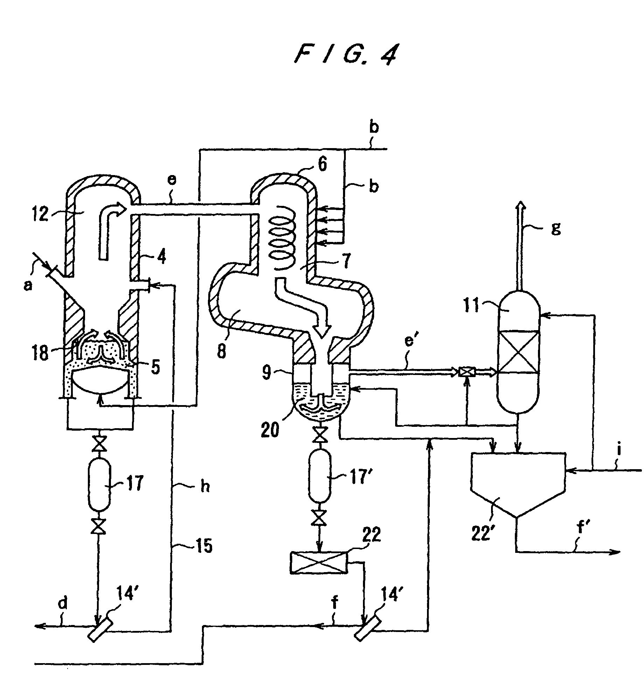

FIG. 4 shows an apparatus for carrying out the method for treating wastes by gasification according to a third embodiment of the present invention. The apparatus comprises a swirling-type high-temperature combustor which is of another type, for generating synthesis gas under a pressure ranging from 10 to 40 atm.

As shown in FIG. 4, the fluidized-bed reactor 4 comprises a revolving-type fluidized-bed reactor, and the swirling-type high-temperature combustor 6 comprises a swirling-type high-temperature combustor having a water tank 20 in a lower end thereof.

The fluidized-bed reactor 4 is connected to a lock hopper 17 which is associated with a screen 14'. The fluidized-bed reactor 4 has an inclined wall 18 therein for circulating fluidized medium therein. The swirling-type high-temperature combustor 6 is connected to a lock hopper 17' which is connected to a reservoir tank 22. The swirling-type high-temperature combustor 6 is connected to a scrubber 11 and a reservoir tank 22'.

In FIG. 4, the fluidized-bed reactor 4 comprises a revolving-type fluidized-bed reactor in which carbonous materials are not accumulated on a fluidized-bed, but uniformly dispersed in the fluidized-bed for thereby accelerating pulverization and gasification. Consequently, the wastes "a" may be crushed coarsely prior to being charged into the fluidized-bed reactor 4, and incombustibles of relatively large size can be discharged from the fluidized-bed reactor 4. Since the fluidized-bed reactor 4 is highly effective in diffusing heat generated therein, a clinker trouble is avoided.

Wastes "a" are supplied at a constant rate through a lock hopper or the like to the fluidized-bed reactor 4. A mixture of O₂ "b" and steam is introduced as a gasifying agent into the fluidized-bed reactor 4 from a bottom thereof, forming a fluidized bed 5 of silica sand as the fluidized medium over a dispersion plate in the fluidized-bed reactor 4. In the fluidized bed 5, the fluidized medium is circulated on the dispersion plate to form a revolving flow of the fluidized medium. The wastes "a" are charged onto the fluidized bed 5 and contacted with the gasifying agent within the fluidized bed 5 which is kept at a temperature ranging from 450 to 650°C and under a pressure ranging from 10 to 40 atm. Being contacted with the gasifying agent, the wastes "a" are rapidly pyrolized. The silica sand "h" in the fluidized bed 5 and incombustibles "d" are discharged from the bottom of the fluidized-bed reactor 4, pass through the lock hopper 17, and then supplied to the screen 14' by which the incombustible materials "d" are separated. The silica sand "h" is charged back through a fluidized medium circulation path 15 into the fluidized-bed reactor 4. The discharged incombustible materials "d" contain metals. Since the fluidized-bed 5 is kept at a temperature ranging from 500 to 600°C, iron, copper, and aluminum can be recovered in a non-corroded condition suitable for recycling.

When the wastes "a" are gasified in the fluidized-bed 5, gas, tar, and carbonous materials are generated. The gas and tar are evaporated and ascend in the fluidized-bed reactor 4. The carbonous materials are pulverized into char by a revolving action of the fluidized bed 5. Since the char is porous powder and light, it is carried with the upward flow of the generated gas. Since the fluidized medium of the fluidized-bed 5 comprises hard silica sand "h", the pulverization of the carbonous materials is promoted.

The generated gas "e" discharged from the fluidized-bed reactor 4 is supplied to the combustion chamber 7 of the swirling-type high-temperature combustor 6. In the swirling-type high-temperature combustor 6, the gas "e" is mixed with preheated oxygen "b" in a swirling flow thereof and gasified at a temperature of 1300°C or higher. Because of the high temperature in the swirling-type high-temperature combustor 6, ash content contained in the char is converted into slag mist which flows down on an inner wall of the high-temperature combustor 6 as slag and enters the water tank 20. After the slag is granulated in the water tank 20, the granulated slag is supplied through the lock hopper 17' into the reservoir tank 22 from which it is discharged as a coarse-grain slag "f". The gas gasified at a relatively high temperature is cooled by the water in the water tank 20, and discharged as a gas "e'" which is cooled and scrubbed by the scrubber 11. Thereafter, refined gas "g" is produced.

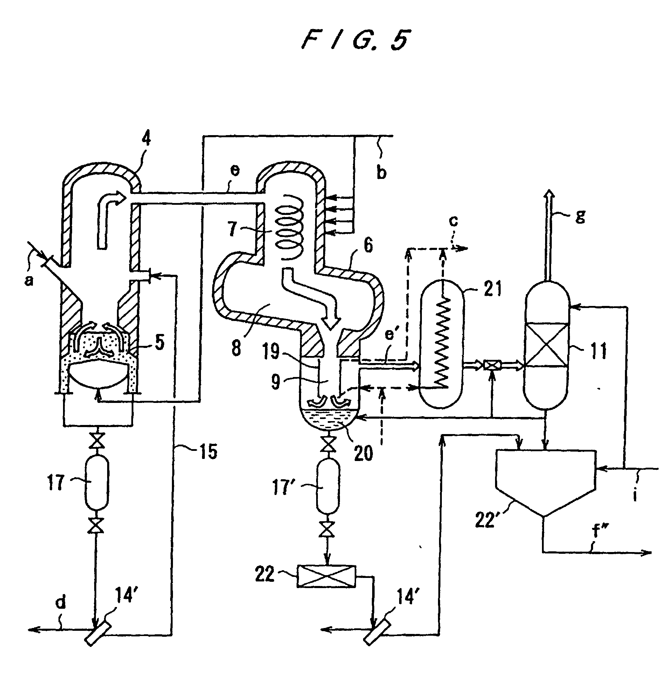

FIG. 5 shows an apparatus for carrying out the method for treating wastes by gasification according to a fourth embodiment of the present invention. The apparatus comprises a swirling-type high-temperature combustor which is of another type.

As shown in FIG. 5, a radiation boiler 19 is disposed in the slag separation chamber 9 of the swirling-type high-temperature combustor 6, and the water tank 20 is installed below the radiation boiler 19 such that gas which descends closely to the surface of water in the water tank 20 then ascends behind the radiation boiler 19.

In the radiation boiler 19, since the gas flows in the same direction as gravity, slag attached to an inner wall of the combustor 6 flows down without clogging. The heat of the slag which flows downwardly is recovered by the radiation boiler 19, thus raising the efficiency of heat recovery.

Further, since the direction of the flow of the gas is abruptly changed in the vicinity of the water surface in the water tank 20, most of slag mist contained in the gas is recovered by the water in the water tank 20 due to inertia forces.

The gas " e' " discharged from the swirling-type high-temperature combustor 6 is supplied to the convection boiler 21 in which heat is recovered from the gas "e'".

The secondary combustion chamber 8 in the swirling-type high-temperature combustor 6 may be dispensed with. The process shown in FIG. 5 is considered to be optimum one as a process for generating electric power.

Typical test data of the system shown in FIG. 3 are given below. Table 1 shown below represents properties of wastes to be gasified. The wastes comprise ordinary municipal wastes with coal added for calorie adjustment.

**Table 1**

| (Properties of waste) | |
|---|---|
| Moisture | 25 % (wet base) |
| Combustible materials | 66 % (wet base) |
| Ash content | 9 % (wet base) |
| Lower calorific value | 3,500 kcal/kg (wet base) |
| Higher calorific value | 5,034 kcal/kg (wet base) |

The wastes were gasified at a relatively low temperature ranging from 500 to 600°C by the fluidized-bed reactor, and then gasified at a relatively high temperature of 1350°C by the swirling-type high-temperature combustor. Data of the gasifying process are given in Tables 2 through 4 shown below.
Table 2 shown below represents a material balance of an overall gasification in which wastes are represented by 100.

**Table 2**

| (Material balance) | | |
|---|---|---|
| Input materials | wastes | 100 (standard) |
| | Oxygen | 46 |
| | Steam | 36 |
| Output materials | Generated dry gas | 112 |
| | Moisture | 61 |
| | Noncombustible materials and slag | 9 |

As shown in table 2, as a gasifying agent for gasifying the wastes, 46 of oxygen and 36 of steam were consumed. The gasification system generated 112 of gas which was greater than the wastes because oxygen was added to the generated gas as the gasifying agent.

Table 3 shows a heat balance of the gasification system in which the combustion heat of the wastes is represented by 100.

**Table 3**

| (Heat balance) | | |
|---|---|---|
| Input heat | Q of wastes | 100 (standard) |
| | H of steam | 7.5 |
| Output heat | Q of generated dry gas | 60 |
| | H of generated dry gas | 16.8 |
| | H of moisture in generated gas | 21.1 |
| | Heat loss of sand + H of noncombustible materials and slag | 3.7 |
| | Heat loss of furnace wall | 5.9 |
| Notes: 1) The heat balance was prepared in terms of the higher calorific value. 2) Q: Combustion heat, H: Enthalpy | | |

Since the combustion heat of the generated gas was 60, a cold gas efficiency was 60 %. The cold gas efficiency represents the ratio of the combustion heat (higher base) of the generated gas divided by the combustion heat (higher base) of the wastes supplied.

It can be seen from Tables that for recovering combustible gas, 3500 kcal/kg may be used as a lower limit for the lower calorific value of the wastes. If the lower calorific value of the wastes exceeds 3500 kcal/kg, then the cold gas efficiency becomes greater than 60 %. The heat loss from the furnace wall was 5.9. If the heat loss can be reduced, the cold gas efficiency can be further increased.

Table 4 shows the dry gas composition of the generated gas. Moisture content in the gas was not counted.

**Table 4**

| (Dry gas composition of generated gas) | |
|---|---|
| H₂ | 47 % |
| CO | 30 % |
| CO₂ | 23 % |

Combustible components of H₂ and CO occupied 77 %. Therefore, a volume corresponding to 77 % of H₂ is obtained after CO shift conversion.

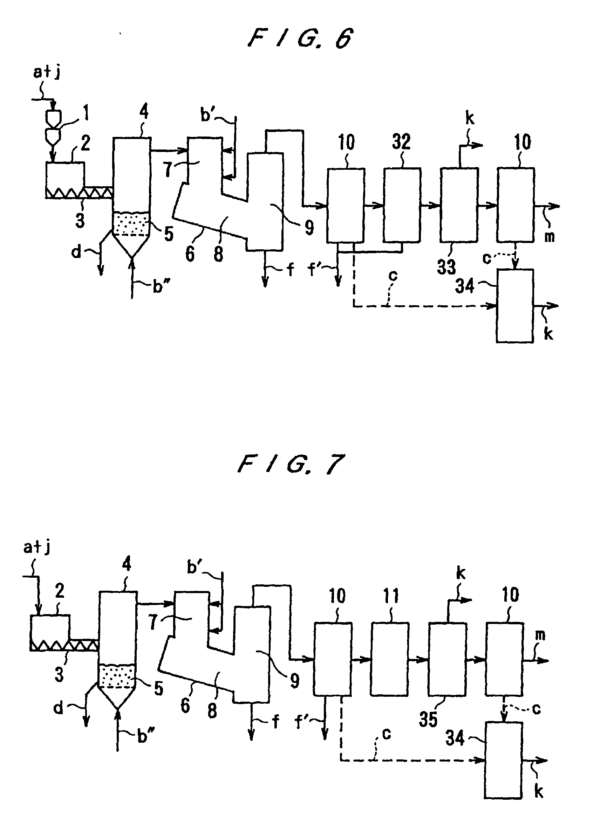

FIG. 6 shows another system for carrying out the method for treating wastes by gasification according to a fifth embodiment of the present invention.

In FIG. 6, low calorific fuel gas is produced under a high pressure of about 20 atm, and then supplied to a compound power generation system including a gas turbine for generating electric power. As shown in FIG. 6, the system is similar to the system shown in FIG. 2 except that it additionally has a ceramic filter 32, a gas turbine 33, and a steam turbine 34.

In FIG. 6, symbols, k and m represent electric power and exhaust gas, respectively. Wastes "a" and coal "j" are charged through the lock hopper system 1 into the hopper 2 from which the wastes "a" and the coal "j" are supplied by the screw feeder 3 into the fluidized-bed reactor 4. Air "b"" is supplied to the fluidized-bed reactor 4, and oxygen enriched air "b'" is supplied to the high-temperature combustor 6. Therefore, generated gas discharged from the high-temperature combustor 6 is low calorific gas composed of H₂, CO, CO₂, N₂ and H₂O and having a calorie ranging from 1000 to 1500 kcal/Nm³ (dry). Temperature in the fluidized-bed reactor 4 and the high-temperature combustor 6 are the same as those in the system for carrying out the method according to the first embodiment in FIG. 2.

Steam "c" is recovered from the gas by the waste heat boiler 10, and fly ash "f'" are separated from the gas by the ceramic filter 32. Thereafter, the gas is supplied to the gas turbine 33 to generate electric power "k". Then, steam "c" is recovered from the gas by another waste heat boiler 10, after which the gas is discharged as exhaust gas "m" into the atmosphere. The collected steam "c" is supplied to the steam turbine 34 to generate electric power "k". In the illustrated system, dust is removed from the generated gas at the high temperature, and then the gas is supplied to the gas turbine 33. However, the generated gas may be refined at a normal temperature and then supplied to the gas turbine 33 in the same manner as in FIG. 2 although such a process lowers the efficiency of power generation.

FIG. 7 shows still another system for carrying out the method for treating wastes by gasification according to a sixth embodiment of the present invention.

In FIG. 7, low calorific fuel gas is produced under atmospheric pressure, and then supplied to a compound power generation system including a gas engine for generating electric power. As shown in FIG. 7, the system is similar to the system shown in FIG. 6 except that it employs a scrubber 11 and a gas engine 35 instead of the ceramic filter 32 and the gas turbine 33. The system shown in FIG. 7 is also free of any lock hopper for supplying wastes "a" and coal "j" to the hopper 2.

Air "b"" is supplied to the fluidized-bed reactor 4, and oxygen enriched air " b' " is supplied to the high-temperature combustor 6. Therefore, generated gas discharged from the high-temperature combustor 6 is low calorific gas composed of N₂, H₂, CO, CO₂ and H₂O and having a calorie ranging from 1000 to 1500 kcal/Nm³ (dry). Temperature in the fluidized-bed reactor 4 and the high-temperature combustor 6 are the same as those in the system for carrying out the treating method according to the first embodiment in FIG.2.

Steam "c" is recovered from the generated gas by the waste heat boiler 10, and the gas is cooled and scrubbed by the scrubber 11. The gas produced at a normal temperature is supplied to the gas engine 35 to generate electric power "k". Then, steam "c" is recovered from the gas by another waste heat boiler 10, after which the gas is discharged as exhaust gas "m" into the atmosphere. The collected steam "c" is supplied to the steam turbine 34 to generate electric power "k". The waste heat boiler 10 subsequent to the gas engine 35 may be dispensed with for a reduction in the cost, but result in a drop in the efficiency of power generation.

The method according to the present invention serves to convert wastes into combustible gases and synthesis gas for chemical industry, and recover valuable resources for achieving environmental conservation. The method is effective to utilize wastes as new resources through thermal, material, and chemical recyclings.

Specifically, the method according to the present invention offers the following advantages:
1. Wastes are converted into medium calorific synthesis gas by a gasification process based on a combination of low- and high-temperature gasification processes, and the medium calorific synthetic gas is used for synthesis gas for chemical industry for producing, for example, ammonia, methanol, or the like, thus achieving the chemical recycling.
2. In the process of generating synthesis gas, ash content is converted into slag which is not harmful. The produced slag may be used as a construction and building material for material recycling.
3. Valuable metals including iron, copper, aluminum, etc. contained in wastes can be recovered in a non-corroded state for material recycling.
4. Low calorific combustible gas is recovered for use as fuel for a gas turbine or the like, or industrial fuel gas for thermal recycling.
5. Toxic dioxins are almost fully decomposed by the high-temperature combustion in the high-temperature combustor at a temperature of 1300°C or higher.

Although certain preferred embodiments of the present invention have been shown and described in detail, it should be understood that various changes and modifications may be made therein without departing from the scope of the appended claim.

## Claims

1. A method for treating wastes by gasification, said method comprising:
supplying said wastes into a revolving flow-type fluidized-bed reactor in which a revolving flow of a fluidized medium is formed;
gasifying said wastes in said fluidized-bed reactor at a temperature ranging from 450 to 800°C by contacting said wastes with a gasifying agent supplied to said fluidized-bed reactor to produce gas and char;
introducing said gas and said char produced in said fluidized-bed reactor directly into a high-temperature combustor; and
producing calorific gas in said high-temperature combustor by gasifying said gas and said char at a temperature of at least 1300°C by contacting said gas and said char with a gasifying agent supplied to said high-temperature combustor, and recovering slag by melting ash content contained in said char.

2. A method as claimed in claim 1, wherein said char is produced by crushing carbonous material produced by gasifying said wastes in said revolving flow-type fluidized-bed using sand or almina as said fluidized medium.

3. A method as claimed in claim 1, wherein said high-temperature combustor comprises a swirling-type high-temperature combustor.

4. A method as claimed in claim 1, wherein said calorific gas is composed mainly of H₂, CO, CO₂ and H₂O.

5. A method as claimed in claim 1, wherein said wastes to which coal are added are supplied into said revolving flow-type fluidized-bed reactor.

6. A method as claimed in claim 1, wherein said gasifying agent supplied to said revolving flow-type fluidized-bed reactor comprises one of air, oxygen enriched air, and a mixture of oxygen and steam.

7. A method as claimed in claim 1, wherein said gasifying agent supplied to said high-temperature combustor comprises one of oxygen enriched air, and oxygen.

8. A method as claimed in claim 1, wherein said calorific gas is cooled, and said slag is cooled.

9. A method as claimed in claim 1, wherein said wastes comprises at least one of municipal wastes, refuse-derived fuel (RDF), plastic wastes including fiber-reinforced plastics (FRP), automobile wastes (shredder dust, waste tires, etc.), electric appliance wastes, special wastes (medical wastes, etc.), sewage sludges, night soil, highly concentrated waste liquids, industrial sludges.

10. A method as claimed in claim 9, wherein low-quality coal is used with said wastes.

11. A method as claimed in claim 1, wherein said calorific gas has atmospheric pressure or high pressure, and is used for power generation or fuel gas or synthesis gas for chemicals.

12. Amethod as claimed in claim 1, wherein said fluidized-bed in said fluidized-bed reactor is in a reducing atmosphere, and metal in said wastes is discharged in non-corroded condition from said revolving flow-type fluidized-bed reactor.

13. A method as claimed in claim 1, wherein said wastes comprises low calorific wastes and high calorific wastes, and the proportion of said low calorific wastes to said high calorific wastes is adjusted.

14. A method as claimed in claim 1, wherein the total amount of oxygen supplied to said revolving flow-type fluidized-bed reactor and said high-temperature combustor is in the range of 0.1 to 0.6 of the theoretical amount of oxygen for combustion.

15. A method as claimed in claim 14, wherein the amount of oxygen supplied to said revolving flow-type fluidized-bed reactor is in the range of 0.1 to 0.3 of the theoretical amount of oxygen for combustion.

16. A method as claimed in claim 1, wherein said ash content is recovered as slag, while dioxins and precursor thereof are substantially decomposed in said high-temperature combustor.

17. A method as claimed in claim 1, comprising adding coal to said wastes as an auxiliary fuel.

18. A method as claimed in claim 1, wherein said revolving flow-type fluidized-bed reactor has a relatively mild fluidized-bed with a substantially low fluidizing gas rate and a relatively intensive fluidized-bed with a substantially high fluidizing gas rate so that said revolving flow of the fluidized medium is formed.

19. An apparatus for treating wastes by gasification, comprising:
a revolving flow-type fluidized-bed reactor for gasifying wastes at a temperature ranging from 450 to 800°C by contacting said wastes with a gasifying agent to produce gas and char, a revolving flow of a fluidized medium being formed therein; and
a high-temperature combustor for producing calorific gas from said gas and said char supplied directly from said fluidized-bed reactor at a temperature of at least 1300°C by contacting said gas and said char with a gasifying agent, and recovering slag by melting ash content contained in said char.

20. An apparatus according to claim 19, wherein said high-temperature combustor comprises a swirling-type high-temperature combustor.

21. A method as claimed in claim 1, wherein said calorific gas and said slag are introduced into water and cooled by said water.

22. A method as claimed in claim 1, wherein alcohol is produced from said calorific gas.

23. A method as claimed in claim 1, wherein methane is produced from said calorific gas.

24. A method as claimed in claim 1, wherein gasoline is produced from said calorific gas.

25. A method as claimed in claim 1, wherein hydrogen is produced from said calorific gas.

26. A method as claimed in claim 1, wherein said calorific gas is used in a combined cycle power generation system.

27. An apparatus as claimed in claim 19 or 20, wherein said high-temperature combustor comprises a water tank, and said calorific gas and said slag are cooled by water in said water tank.

## Patentansprüche

1. Verfahren zur Verarbeitung von Abfällen durch Vergasung, wobei das Verfahren folgendes vorsieht:
Liefern der Abfälle in einen Reaktor mit einem revolvierenden fluidisierten Bett des Strömungstyps indem ein revolvierender Fluss oder eine umlaufende Strömung eines fluidisierten Mediums gebildet wird;
Vergasen der erwähnten Abfälle in dem Reaktor mit fluidisiertem Bett mit einer Temperatur im Bereich von 450 bis 800°C durch Kontaktieren der Abfälle mit einem Vergasungsagens geliefert an den Reaktor mit fluidisiertem Bett zur Erzeugung von Gas und Holzkohle (char);
Einführen des erwähnten Gases und der erwähnten Holzkohle erzeugt in dem erwähnten Reaktor mit fluidisiertem Bett direkt in eine Hochtemperaturverbrennungsvorrichtung; und
Erzeugen eines Brennwert besitzenden Gases in der Hochtemperaturverbrennungsvorrichtung durch Vergasen des erwähnten Gases und der erwähnten Holzkohle bei einer Temperatur von mindestens 1300°C durch Kontaktieren des erwähnten Gases und der erwähnten Holzkohle mit dem Vergasungsagens geliefert an die Hochtemperaturverbrennungsvorrichtung, und Wiedergewinnen von Schlacke durch Schmelzen des Aschegehalts enthalten in der erwähnten Holzkohle.

2. Verfahren nach Anspruch 1, wobei die Holzkohle erzeugt wird durch Zerkleinern von kohlenstoffhaltigem Material erzeugt durch Vergasung der Abfälle in dem revolvierenden fluidisierten Bett des Strömungstyps unter Verwendung von Sand oder Aluminiumoxid als das erwähnte fluidisierte Medium.

3. Verfahren nach Anspruch 1, wobei die Hochtemperaturverbrennungsvorrichtung eine Hochtemperaturverbrennungsvorrichtung des Wirbeltyps ist.

4. Verfahren nach Anspruch 1, wobei das einen Brennwert besitzende Gas hauptsächlich aus H₂, CO, CO₂ und H₂O besteht.

5. Verfahren nach Anspruch 1, wobei die erwähnten Abfälle zu denen Kohle hinzugefügt ist in den fluidisierten Bettreaktor des revolvierenden Strömungstyps geliefert werden.

6. Verfahren nach Anspruch 1, wobei das an den fluidisierten Bettreaktor des Strömungs- oder Flusstyps gelieferte Agens einen der folgenden Bestandteile aufweist: Luft, mit Sauerstoff angereicherte Luft, und eine Mischung aus Sauerstoff und Dampf.

7. Verfahren nach Anspruch 1, wobei das erwähnte Vergasungsagens welches an die Hochtemperaturverbrennungsvorrichtung geliefert wird, mit Sauerstoff angereicherte Luft und/oder Sauerstoff ist.

8. Verfahren nach Anspruch 1, wobei das einen Brennwert besitzende Gas gekühlt wird, und wobei die Schlacke gekühlt wird.

9. Verfahren nach Anspruch 1, wobei die Abfälle mindestens einen der folgenden Abfälle aufweisen: städtische Abfälle, aus Müll abgeleiteter Brennstoff (refuse-derived fuel-RDF), Kunststoffabfälle einschließlich faserverstärkte Kunststoffe (FRP = fiber-reinforced plastics), Automobilabfälle (Schredderstaub, Abfallreifen usw.), elektrische Geräteabfälle, spezielle Abfälle (medizinische Abfälle usw.), Abwasserschlämme, menschliche Exkremente, hochkonzentrierte Abfallflüssigkeiten, industrielle Schlämme.

10. Verfahren nach Anspruch 9, wobei mit den Abfällen Kohle niedriger Qualität verwendet wird.

11. Verfahren nach Anspruch 1, wobei das einen Brennwert besitzende Gas einen atmosphärischen Druck oder Hochdruck besitzt und verwendet wird für die Leistungserzeugung oder als Brennstoffgas oder als Synthesegas für Chemikalien.

12. Verfahren nach Anspruch 1, wobei das fluidisierte Bett in dem erwähnten fluidisierten Bettreaktor sich in einer reduzierenden Atmosphäre befindet, und wobei Metall in den erwähnten Abfällen in dem nicht korrigierten Zustand von dem Reaktor mit revolvierenden fluidisierten Bett des Fluss- oder Strömungstyps abgegeben wird.

13. Verfahren nach Anspruch 1, wobei die erwähnten Abfälle Abfälle mit geringem Brennwert und Abfälle mit hohem Brennwert aufweisen, und wobei der Anteil der Abfälle mit niedrigem Brennwert eingestellt wird auf die Abfälle mit dem hohen Brennwert.

14. Verfahren nach Anspruch 1, wobei die Gesamtmenge an Sauerstoff geliefert an den fluidisierten Bettreaktor des revolvierenden Strömungstyps und an die erwähnte Hochtemperaturverbrennungsvorrichtung im Bereich von 0,1 bis 0,6 der theoretischen Menge des Sauerstoffs für die Verbrennung liegt.

15. Verfahren nach Anspruch 14, wobei die Sauerstoffmenge geliefert an den fluidisierten Bettreaktor des revolvierenden Strömungstyps im Bereich von 0,1 bis 0,3 der theoretischen Menge des Sauerstoffs für die Verbrennung liegt.

16. Verfahren nach Anspruch 1, wobei der Aschegehalt als Schlacke wiedergewonnen wird, während Dioxine und die Ausgangsstoffe dafür im wesentlichen in der erwähnten Hochtemperaturverbrennungsvorrichtung zerlegt werden.

17. Verfahren nach Anspruch 1, wobei die Zugabe von Kohle an die Abfälle als ein Hilfsbrennstoff vorgesehen ist.

18. Verfahren nach Anspruch 1, wobei der fluidisierte Bettreaktor des revolvierenden Strömungstyps ein relativ mild-fluidisiertes Bett aufweist, mit einer im wesentlichen niedrigen Fluidisierungsgasrate und ein relativ intensiv fluidisiertes Bett mit einer wesentlich höheren Fluidisierungsgasrate derart, dass der erwähnte revolvierende Fluss oder Strömung des fluidisierten Mediums gebildet wird.

19. Vorrichtung zum Behandeln von Abfällen durch Vergasen, wobei folgendes vorgesehen ist:
ein fluidisierter Bettreaktor des revolvierenden Strömungstyps zum Vergasen der Abfälle bei einer Temperatur im Bereich von 450 bis 800°C durch Kontaktieren der Abfälle mit einem Vergasungsagens zur Erzeugung von Gas und Holzkohle (char), wobei eine revolvierende Strömung oder Fluss aus einem fluidisierten Medium darin gebildet wird; und
eine Hochtemperaturverbrennungsvorrichtung zur Erzeugung eines Brennwert besitzenden Gases aus dem erwähnten Gas und der erwähnten Holzkohle geliefert direkt von dem Reaktor mit fluidisiertem Bett mit einer Temperatur von mindestens 1300°C durch Kontaktieren des erwähnten Gases und der erwähnten Holzkohle mit einem Vergasungsagens, und Wiedergewinnung von Schlacke durch Schmelzen des Aschegehalts enthalten innerhalb der erwähnten Holzkohle.

20. Vorrichtung nach Anspruch 19, wobei die Hochtemperaturverbrennungsvorrichtung eine Hochtemperaturverbrennungsvorrichtung des Wirbeltyps aufweist bzw. ist.

21. Verfahren nach Anspruch 1, wobei das einen Brennwert besitzende Gas und die erwähnte Schlacke in Wasser eingeführt werden und durch das erwähnte Wasser gekühlt werden.

22. Verfahren nach Anspruch 1, wobei aus dem Brennwert besitzenden Gas Alkohol hergestellt wird.

23. Verfahren nach Anspruch 1, wobei aus dem Brennwert besitzenden Gas Methan hergestellt wird.

24. Verfahren nach Anspruch 1, wobei aus dem Brennwert besitzenden Gas Benzin hergestellt wird.

25. Verfahren nach Anspruch 1, wobei aus dem Brennwert besitzenden Gas Wasserstoff hergestellt wird.

26. Verfahren nach Anspruch 1, wobei das erwähnten eine Brennwert besitzende Gas in einem Leistungserzeugungssystem mit kombiniertem Zyklus verwendet wird.

27. Eine Vorrichtung nach Anspruch 19 oder 20, wobei die Hochtemperaturverbrennungsvorrichtung einen Wassertank aufweist, und wobei das einen Brennwert besitzende Gas und die Schlacke durch das Wasser in dem Wassertank gekühlt werden.

## Revendications

1. Procédé pour le traitement de déchets par gazéification, ledit procédé consistant à:
envoyer lesdits déchets dans un réacteur à lit fluidisé du type à circulation tournante, dans lequel une circulation tournante d'un milieu fluidisé est formée;
gazéifier lesdits déchets dans ledit réacteur à lit fluidisé à une température comprise entre 450 et 800°C par mise en contact desdits déchets avec un agent de gazéification envoyé audit réacteur à lit fluidisé pour produire un gaz et un résidu de carbonisation;
introduire directement ledit gaz et ledit résidu de carbonisation produits dans ledit réacteur à lit fluidisé dans une chambre de combustion à haute température; et
produire un gaz calorifique dans ladite chambre de combustion à haute température par gazéification dudit gaz et dudit résidu de carbonisation à une température d'au moins 1300°C par mise en contact dudit gaz et dudit résidu de carbonisation avec un agent gazéifiant envoyé à ladite chambre de combustion à haute température, et récupérer les scories par fusion du contenu en cendres présent dans ledit résidu de carbonisation.

2. Procédé selon la revendication 1, selon lequel ledit résidu de carbonisation est produit par broyage d'un matériau carbonifère produit par gazéification desdits déchets dans ledit lit fluidisé du type à circulation tournante en utilisant du sable ou de l'alumine pour constituer ledit milieu fluidisé.

3. Procédé selon la revendication 1, selon lequel ladite chambre de combustion à haute température comprend une chambre de combustion à haute température du type à tourbillonnement.

4. Procédé selon la revendication 1, selon lequel ledit gaz calorifique est constitué principalement de H₂, CO, CO₂ et H₂O.

5. Procédé selon la revendication 1, selon lequel lesdits déchets, auxquels du charbon est ajouté, sont envoyés dans ledit réacteur à lit fluidisé du type à circulation tournante.

6. Procédé selon la revendication 1, selon lequel ledit agent de gazéification envoyé audit réacteur à lit fluidisé du type à circulation tournante comprend l'un de: air, air enrichi d'oxygène et mélange d'oxygène et de vapeur.

7. Procédé selon la revendication 1, selon lequel ledit agent de gazéification envoyé à ladite cambre de combustion à haute température comprend l'un de: air enrichi d'oxygène et oxygène.

8. Procédé selon la revendication 1, selon lequel ledit gaz calorifique est refroidi et lesdites scories sont refroidies.

9. Procédé selon la revendication 1, selon lequel lesdits déchets comprennent au moins l'un de: déchets d'ordures ménagères, combusticle tiré des ordures (RDF), déchets de matières plastiques, incluant des matières plastiques renforcées par des fibres (FRP), des déchets d'automobiles (poussière de déchiqueteuse, pneumatiques mis au rebut, etc.), déchets d'appareils électriques, déchets spéciaux (déchets médicaux, etc.) boues d' égouts, matières de vidange, déchets liquides très concentrés, boues industrielles.

10. Procédé selon la revendication 9, selon lequel on utilise du charbon de faible qualité avec lesdits déchets.

11. Procédé selon la revendication 1, selon lequel ledit gaz calorifique est à la pression atmosphérique ou à une haute pression et est utilisé pour produire de l'énergie ou un gaz combustible ou un gaz de synthèse pour produits chimiques.

12. Procédé selon la revendication 1, selon lequel ledit lit fluidisé dans ledit réacteur à lit fluidisé est situé dans une atmosphère réductrice, et du métal situé dans lesdits déchets est évacué, dans un état non corrodé, dudit réacteur à lit fluidisé du type à circulation tournante.

13. Procédé selon la revendication 1, selon lequel lesdits déchets comprennent des déchets faiblement calorifiques et des déchets hautement calorifiques, et le pourcentage desdits déchets faiblement calorifiques par rapport auxdits déchets hautement calorifiques est ajusté.

14. Procédé selon la revendication 1, selon lequel la quantité totale d'oxygène envoyée audit réacteur à lit fluidisé du type à circulation tournante et à ladite chambre de combustion à haute température se situe dans la gamme de 0,1 à 0,6 de la quantité théorique d'oxygène pour la combustion.

15. Procédé selon la revendication 14, selon lequel la quantité d'oxygène envoyée audit réacteur à lit fluidisé du type circulation tournante se situe dans la gamme de 0,1 à 0,3 de la quantité théorique d'oxygène pour la combustion.

16. Procédé selon la revendication 1, selon lequel ledit contenu en cendres est récupéré en tant que scories tandis que des dioxines et des précurseurs de dioxines sont essentiellement décomposés dans ladite chambre de combustion à haute température.

17. Procédé selon la revendication 1, comprenant l'addition de charbon auxdits déchets en tant que combustible auxiliaire.

18. Procédé selon la revendication 1, selon lequel ledit réacteur à lit fluidisé du type à circulation tournante possède un lit fluidisé relativement faible avec un débit de gaz de fluidisation essentiellement faible et un lit fluidisé relativement intense avec un débit essentiellement élevé de gaz de fluidisation de sorte que ledit écoulement circulant du milieu fluidisé est formé.

19. Dispositif pour traiter des déchets par gazéification comprenant:
un réacteur à lit fluidisé du type à écoulement circulant pour gazéifier des déchets à une température comprise entre 450 et 800°C par mise en contact desdits déchets avec un agent de gazéification pour produire un gaz et un résidu de carbonisation, une circulation tournante d'un milieu fluidisé étant formé à l'intérieur de ce réacteur; et
une chambre de combustion à haute température pour produire un gaz calorifique à partir dudit gaz et dudit résidu de carbonisation envoyé directement par ledit réacteur à lit fluidisé à une température d'au moins 1300°C par mise en contact dudit gaz et dudit résidu de carbonisation avec un agent de gazéification, et récupération des scories par fusion du contenu en cendres présent dans ledit résidu de carbonisation.

20. Dispositif selon la revendication 19, dans lequel ladite chambre de combustion à haute température comprend une chambre de combustion à haute température du type à tourbillonnement.

21. Procédé selon la revendication 1, selon lequel ledit gaz calorifique et lesdites scories sont introduits dans de l'eau et refroidis par ladite eau.

22. Procédé selon la revendication 1, selon lequel de l'alcool est produit à partir dudit gaz calorifique.

23. Procédé selon la revendication 1, dans lequel du méthane est produit à partir dudit gaz calorifique.

24. Procédé selon la revendication 1, selon lequel de l'essence est produite à partir dudit gaz calorifique.

25. Procédé selon la revendication 1, selon lequel de l'hydrogène est produit à partir dudit gaz calorifique.

26. Procédé selon la revendication 1, selon lequel ledit gaz calorifique est utilisé dans un système de production d'énergie à cycle combiné.

27. Dispositif selon la revendication 19 ou 20, dans lequel ladite chambre de combustion à haute température comprend un réservoir d'eau, et ledit gaz calorifique et lesdites scories sont refroidies par de l'eau située dans ledit réservoir d'eau.
